# EUROPEAN PATENT SPECIFICATION

(11) **EP 3 513 109 B1**
(45) Date of publication and mention of the grant of the patent: **29.12.2021**
(21) Application number: 17772343.4
(22) Date of filing: 14.09.2017
(51) Int. Cl.: F16L 23/18, F16J 15/02, F16J 15/10, F16J 15/12, F16L 21/02, F16L 23/028

(54) **SEAL**
DICHTUNG
JOINT D'ÉTANCHÉITÉ

(30) Priority: 14.09.2016 GB 201615579
(43) Date of publication of application: 24.07.2019
(73) Proprietor: Eaton Intelligent Power Limited, Dublin 4 (IE)
(72) Inventor: CANN, Benjamin, 67610 La Wantzenau (FR); LEISENHEIMER, Bert, 76689 Karlsdorf-Neuthard (DE); SCHORSCH, Christophe, 67610 La Wantzenau (FR)
(74) Representative: Maiwald Patent- und Rechtsanwaltsgesellschaft mbH
(86) International application number: PCT/EP2017/073152
(87) International publication number: WO 2018/050752

(56) References cited:
- WO-A2-2007/145779
- US-A- 4 426 095
- US-A1- 2005 242 571
- US-B1- 7 407 165

## Description

The invention relates to a seal, in particular for a fluid line end connector for example arranged on one end or both end of a fluid line. A fluid line end connector is used to connect a fluid line with a system component.

Such a seal is for example used in air conditioning systems to seal an end connection of a fluid line to a system component, such as a condenser, pump or expansion valve.

The known seals, which are typically washer shaped, are positioned between two flanges to which the ends of fluid lines are connected. These flanges are bolted together to clamp the seal between the flanges. A sufficient axial force, with respect to the direction of the fluid line, needs to be exerted on the seal in order to have a sufficient sealing function.

To this end, the flanges are typically of a metal, such as steel or aluminum, which does not deform much, when the flanges are bolted together. However, in particular in automotive applications, it is desired to reduce the weight of the fluid lines as much as possible. An obvious choice would be to manufacture the fluid lines of plastic, in particular thermoplastic, which in view of the known metal, reduces the weight significantly.

However, a disadvantage of using thermoplastic is the viscoelasticity of thermoplastic. When the flanges of a known fluid line connection would be made out of thermoplastic material, the flanges present lower resistance to the torque force when the parts are bolted together, such that not a sufficient axial force can be applied to the washer type seal from the prior art. So, no sufficient sealing would be obtained.

When the flanges would be designed in thermoplastic more rigidly and more stiff, in order to be able to sustain sufficient axial force, then the flanges would become bulky. The oversized flanges would require additional space, which is in automotive applications often not available or applicable due to packaging constraints, and the additional material to improve the strength to the plastic flange will adversely affect the weight. It would also be possible to use stronger thermoplastics, such as PEEK, but this would increase the costs excessively. WO 2007/145779 A2 suggests a tube seal including a rigid cylindrical tube and an elastomeric seal body molded to the outer surface of the cylindrical tube. US 2005/242571 A1 suggests a pipe fitting including a body having sockets for receiving pipes therein and a composite gasket housed within a circumferential gasket retention housing integral with the socket. US 4 426 095 A suggests a composite flexible seal for providing a fluid tight joint between a pipe section and the inside surface of a receiving opening. US 7 407 165 B1 suggests a composite sleeve seal for sealing a conduit connection including a body portion having collar sections spaced apart from one another to define gaps therebetween, and being interconnected to one another by link segments spanning the gaps.

It is therefore an object of the invention to reduce the above mentioned disadvantages in order to make the use of plastic flanges more viable.

This object is achieved according to the invention with a seal according to claim 1**.**

The seal according to the invention is tubular shaped in contrast to the washer shaped seals of the prior art. The seal according to the invention is to be arranged between two fluid line ends, which are inserted in to each other, similar to a telescopic arrangement. As a result, the sealing will be provided in a radial direction, between the outer circumferential surface of a first fluid line and the inner circumferential surface of a second fluid line. So, the force required for the sealing is radially directed and no longer in axial direction as with the prior art seals. A radial sealing force is easily obtained by dimensioning both fluid line ends and the seal.

By using a tubular body on which the first and second elastomeric layers are arranged, the tubular body provides a rigid support to the elastomeric layers, such that the seal can easily be inserted into a fluid line end or over a fluid line end, without overstretching the elastomeric material.

Also pressure differences over the elastomeric layers can be resisted as the layers are attached to the tubular body and typically are also restricted in radial direction. Thus, the tubular body ensures that the first and second elastomeric layers maintain their position and general shape when being mounted and in use. As a result, complex grooves in the end connector of the fluid line are no longer required. This advantage allows for plastic, in particular thermoplastic, fluid line end connections to be used, and which do not suffer from flash by the contact of the elastomeric layer on this surfaces, because these surfaces can be made using a single mould surface, which prevents the occurance of flash on these surfaces. A seamless surface provides for low permeation sealings when using thermoplastic components.

The tubular body should be rigid in respect with the elastomeric material of the layers. Therefore, the tubular body could be of metal or a non-elastic plastic, such as a non-elastic thermoplastic (PA-PP) or a reinforced thermoplastic (PA-CF or PA-GF) or high performance thermoplastics (PEEK or High Strength PP).

In a preferred embodiment of the seal according to the invention the first elastomeric layer extends over the first axial end of the tubular body and merges into the second elastomeric layer.

Because the elastomeric layer runs over the first axial end, the seal can be slid more easily into a female end connection of a fluid line or female component connection. The continuous and flexible elastomeric layer reduces the friction, while also a continuous and non-interrupted sealing layer is provided between the two surfaces of the end connection of the fluid line or component connection.

In a further embodiment of the seal according to the invention the second elastomeric layer is provided with at least one circumferential ridge.

In a further preferred embodiment of the seal according to the invention the first elastomeric layer comprises at least one radially inward directed circumferential lip.

Due to the elastic properties of the elastomeric material, the elastomeric layers can easily be provided with ridges and lips to further improve the sealing action of the seal. The provision of such ridges and lips does not require complex moulds as after moulding the layers, due to the elasticity of the material, this elastomeric material can easily be released from the moulds.

Preferably, the at least one circumferential lip is arranged on an axial end of the first elastomeric layer. The lip provides for an additional seal relative to the male fluid line end connection, which is inserted into the seal.

In a further embodiment, the radially inward directed circumferential lip is bendable outwards so it can be entirely retracted from an inner lumen defined by first elastomeric layer. In other words, the inner diameter of the first elastomeric layer can be constant in the axial direction.

In another embodiment the seal comprises a second radially inward directed circumferential lip which is arranged on the other axial end of the first elastomeric layer. Preferably, the second radially inward directed circumferential lip is bendable outwards so it can be entirely retracted from an inner tubular lumen defined by first elastomeric layer.

In another preferred embodiment of the seal according to the invention the radially outward directed flange is arranged on the second axial end of the tubular body.

The outward directed flange ensures that the seal can be inserted into a hole up to the length of the seal. When a second fluid line end is inserted into the seal, the flange prevents the seal from being shifted further into the hole.

In yet a further preferred embodiment of the seal according to the invention the first section of the tubular body has a reduced diameter with respect to a second section of the tubular body, wherein the second elastomeric layer is only arranged over the first section of the tubular body, such that the outer diameter of the second elastomeric layer equals the outer diameter of the second section of the tubular body.

Due to the stepped diameter of the tubular body, the hole, in which the seal is inserted can both be used to center the tubular body with the larger diameter section and be used to provide a seal with the elastomeric layer arranged on the smaller diameter section of the tubular body.

In still a further preferred embodiment of the seal according to the invention the tubular body is cylindrical. A cylindrical shape provides for an optimal strength in radial direction as well as an even distribution along the circumference.

Preferably, the first and second elastomeric layers are fused to the tubular body. By fusing the elastomeric layers to the tubular body a strong attachment is provided of the layers to the body, which contributes to the robustness of the seal.

The invention further relates to a combination of a seal according to the invention and a fluid line connector comprising a male connector part and a female connector part, wherein the male connector part comprises a body with a tubular extension and wherein the female connector part comprises a body with an opening, wherein the seal is coaxially arranged in the opening and wherein the tubular extension of the male connector part is coaxially arranged in the seal, and wherein the fluid line connector further comprises mounting means for mounting the male connector part and female connector part together.

With the combination, the fluid line ends are provided by the male and female connector parts, which can be mated with the interposition of the seal according to the invention.

Preferably, the outer dimensions of the seal correspond with the inner dimensions of the hole in the female connector part and wherein the inner dimensions of the seal correspond with the outer dimensions of the tubular extension.

Depending on the required radial force on the seal, the dimensions of the seal and of the connector parts are chosen to be either identical or such that the elastomeric layers need to be compressed to mount the connector parts and the seal.

It is furthermore preferred if the male connector part and female connector part are of plastic. In particular in automotive applications, the use of plastic reduces weight and due to the radial sealing of the seal according to the invention, no excessive material is required to obtain sufficient strength, as would be the case with the washer type of seals according to the prior art.

It is also preferred if the combination is in the mounted state a radially inward directed circumferential lip comprised by the seal is bent outwards and entirely retracted from an inner lumen defined by first elastomeric layer.

These and other features of the invention will be elucidated in conjunction with the accompanying drawings.
Figure 1 shows an exploded perspective view of an embodiment of a combination according to the invention.
Figure 2A shows a cross sectional view of the seal according to the invention and according to figure 1.
Figure 2B shows a cross sectional view of the combination of figure 1 in assembled state.

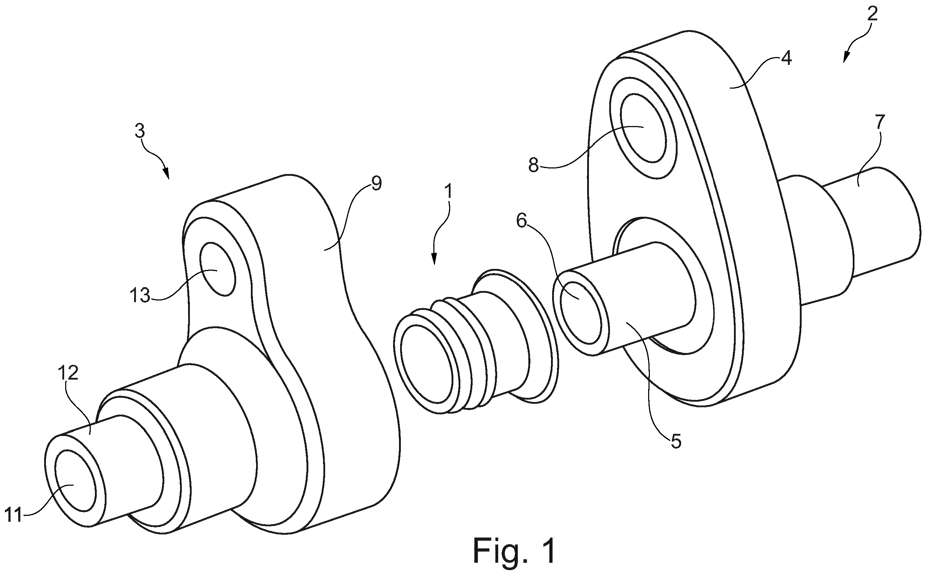

Figure 1 shows a combination according to the invention with a seal 1 and a fluid line connector with a male connector part 2 and a female connector part 3.

The male connector part 2 has a body 4 with a tubular extension 5 with a channel 6, which connects to the fluid line 7. The body 4 has furthermore a mounting hole 8 with which the male connector part 2 can be mounted to the female connector part 3.

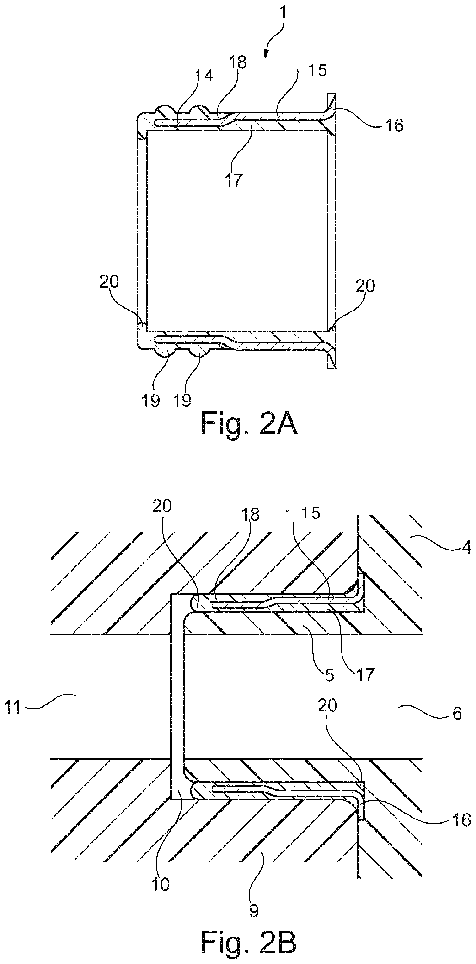

The female connector part 3 also has a body 9 with a hole 10 (see figure 2B) . A channel 11 debouches in this hole and the channel 11 connects to a fluid line 12. The body 9 also has a mounting hole 13 for cooperation with the mounting hole 8 of the male connector part 2.

Figure 2A shows the seal 1 in cross sectional view. The seal 1 has a tubular body 14, 15, 16 of preferably metal or a rigid plastic. The tubular body 14, 15, 16 has a first section 14 with a reduced diameter with respect to the diameter of a second section 15. Furthermore, the tubular body 14, 15, 16 is provided with an outwardly directed flange 16.

A first elastomeric layer 17 is arranged on the inner surface of the tubular body 14, 15, 16. This first elastomeric layer 17 runs along a first axial end of the tubular body 14, 15, 16 and merges into a second elastomeric layer 18, which is arranged on the outer surface of the tubular body 14, 15, 16. This second elastomeric layer 18 is only arranged over the first section 14 with reduced diameter, such that the outer diameter of the second elastomeric layer 18 equals the outer diameter of the second section 15.

The second elastomeric layer 18 is furthermore provided with two circumferential ridges 19, while the first elastomeric layer 17 is on both axial ends provided with radially inwardly directed lips 20.

Figure 2B shows a cross sectional view of the combination of figure 1 in mounted state. The seal 1 is positioned on the tubular extension 5 of the male connector part 2, such that the first elastomeric layer 17 is pressed sealingly on the outer circumferential surface of the tubular extension 5.

The male connector part 2 with the seal 1 is inserted into the hole 10 of the female connector part 3, such that the second elastomeric layer 18 is pressed to the inward circumferential surface of the hole 10. The second section 15 has the same outer diameter as the inner diameter of the hole 10, such that the seal 1 is centered in this hole 10.

The flange 16 of the seal 1 is embedded in a groove in the body 4 of the male connector part 4, such that the bodies 4, 9 of both connector parts 2, 3 can be mounted flush against each other, while the flange 16 prevents the seal 1 from being shifted further into the hole 10.

Figure 2B also shows that the radially inward directed circumferential lip 20 at the first axial end of the first elastomeric layer 17 (left side) is bent outwards and is entirely retracted from an inner lumen defined by first elastomeric layer 17.

Likewise, the second radially inward directed circumferential lip 20 arranged on the other axial right end of the first elastomeric layer 17 is bent outwards and is entirely retracted from the inner lumen defined by first elastomeric layer 17.

The inner diameter of the first elastomeric layer 17 is overall constant in the axial direction of the seal 1. Also, the outer diameter of the outer circumferential surface of the tubular extension 5 is, over the whole axial length, equal to the inner diameter of the first elastomeric layer 17.

Therefore, in the mounted state, the radially inward directed circumferential lips 20 comprised by the seal 1 are bent (or pressed) outwards and entirely retracted from the inner lumen defined by first elastomeric layer 17. Preferably an axial gap between the axial (distant) end of the tubular extension 5 and the body 9 of the female connector part 3 is free of the circumferential lip 20.

Both the connector parts 2, 3 are preferably made of a plastic, such that for example weight can be reduced.

## Claims

1. Seal (1), in particular for a fluid line connector, comprising:
- a tubular body (14, 15, 16) with an inner surface, an outer surface, a first axial end and a second axial end, wherein said tubular body (14, 15, 16), has a stepped diameter, including a first section (14), a second section (15), and a radially outward directed flange (16);
- a first elastomeric layer (17) arranged on the inner surface of the tubular body (14, 15, 16); and
- a second elastomeric layer (18) arranged on the outer surface of the tubular body (14, 15, 16).

2. Seal (1) according to claim 1, wherein the first elastomeric layer (17) extends over the first axial end of the tubular body (14, 15, 16) and merges into the second elastomeric layer (18).

3. Seal (1) according to claim 1 or 2, wherein the second elastomeric layer (18) is provided with at least one circumferential ridge (19).

4. Seal (1) according to any of the preceding claims, wherein the first elastomeric layer (17) comprises at least one radially inward directed circumferential lip (20).

5. Seal (1) according to claim 4, wherein the at least one circumferential lip (20) is arranged on an axial end of the first elastomeric layer (17).

6. Seal (1) according to claims 4 or 5, wherein the radially inward directed circumferential lip (20) is bendable outwards or compressible outwards so it can be entirely retracted from an inner lumen defined by first elastomeric layer (17).

7. Seal (1) according any of the claims 4 to 6, wherein a second radially inward directed circumferential lip (20) is arranged on the other axial end of the first elastomeric layer (17).

8. Seal (1) according to any of the preceding claims, wherein the radially outward directed flange (16) is arranged on the second axial end of the tubular body (14, 15, 16).

9. Seal (1) according to any of the preceding claims, wherein the first section (14) of the tubular body (14, 15, 16) has a reduced diameter with respect to the second section (15) of the tubular body (14, 15, 16), wherein the second elastomeric layer (18) is only arranged over the first section (14) of the tubular body (14, 15, 16) such that the outer diameter of the second elastomeric layer (18) equals the outer diameter of the second section (15) of the tubular body (14, 15, 16).

10. Seal (1) according to any of the preceding claims, wherein the tubular body (14, 15, 16) is cylindrical.

11. Seal (1) according to any of the preceding claims, wherein the first and second elastomeric layers (17, 18) are fused to the tubular body (14, 15, 16).

12. Combination of a seal (1) according to any of the preceding claims and a fluid line connector comprising a male connector part (2) and a female connector part (3), wherein the male connector part (2) comprises a body (4) with a tubular extension (5) and wherein the female connector (3) part comprises a body (9) with an opening, wherein the seal (1) is coaxially arranged in the opening and wherein the tubular extension (5) of the male connector part (2) is coaxially arranged in the seal (1), and wherein the fluid line connector further comprises mounting means for mounting the male connector part (2) and female connector part (3) together.

13. Combination according to claim 12, wherein the outer dimensions of the seal (1) correspond with the inner dimensions of the hole (10) in the female connector part (3) and wherein the inner dimensions of the seal (1) correspond with the outer dimensions of the tubular extension (5).

14. Combination according to claim 12 or 13, wherein the male connector part (2) and female connector part (3) are of plastic.

15. Combination according to any of the claims 12 to 14, wherein, in the mounted state, a radially inward directed circumferential lip (20) comprised by the seal (1) is bent or compressed outwards and entirely retracted from an inner lumen defined by first elastomeric layer (17).

## Patentansprüche

1. Dichtung (1), insbesondere für einen Fluidleitungsanschluss, umfassend;
- einen rohrförmigen Körper (14, 15, 16) mit einer Innenfläche, einer Außenfläche, einem ersten axialen Ende und einem zweiten axialen Ende, wobei der rohrförmige Körper (14, 15, 16) einen abgestuften Durchmesser aufweist und einen ersten Abschnitt (14), einen zweiten Abschnitt (15) und einen radial nach außen gerichteten Flansch (16) umfasst;
- eine erste Elastomerschicht (17), die an der Innenfläche des rohrförmigen Körpers (14, 15, 16) vorgesehen ist; und
- eine zweite Elastomerschicht (18), die auf der Außenfläche des rohrförmigen Körpers (14, 15, 16) vorgesehen ist.

2. Dichtung (1) nach Anspruch 1, wobei sich die erste Elastomerschicht (17) über das erste axiale Ende des rohrförmigen Körpers (14, 15, 16) erstreckt und in die zweite Elastomerschicht (18) übergeht.

3. Dichtung (1) nach Anspruch 1 oder 2, wobei die zweite Elastomerschicht (18) mit zumindest einem umlaufenden Steg (19) bereitgestellt ist.

4. Dichtung (1) nach einem der vorhergehenden Ansprüche, wobei die erste Elastomerschicht (17) zumindest eine radial nach innen gerichtete umlaufende Lippe (20) umfasst.

5. Dichtung (1) nach Anspruch 4, wobei die zumindest eine umlaufende Lippe (20) an einem axialen Ende der ersten Elastomerschicht (17) angeordnet ist.

6. Dichtung (1) nach Anspruch oder 5, wobei die radial nach innen gerichtete Umfangslippe (20) nach außen biegbar oder nach außen komprimierbar ist, so dass sie vollständig aus einem durch die erste Elastomerschicht (17) definierten inneren Lumen zurückgezogen werden kann.

7. Dichtung (1) nach einem der Ansprüche 4 bis 6, wobei eine zweite, radial nach innen gerichtete, umlaufende Lippe (20) am anderen axialen Ende der ersten Elastomerschicht (17) angeordnet ist.

8. Dichtung (1) nach einem der vorhergehenden Ansprüche, wobei der radial nach außen gerichtete Flansch (16) am zweiten axialen Ende des rohrförmigen Körpers (14, 15, 16) angeordnet ist.

9. Dichtung nach einem der vorhergehenden Ansprüche, wobei der erste Abschnitt (14) des rohrförmigen Körpers (14, 15, 16) einen reduzierten Durchmesser gegenüber dem zweiten Abschnitt (15) des rohrförmigen Körpers (14, 15, 16) aufweist, wobei die zweite Elastomerschicht (18) nur über dem ersten Abschnitt (14) des rohrförmigen Körpers (14, 15, 16) angeordnet ist, so dass der Außendurchmesser der zweiten Elastomerschicht (18) gleich dem Außendurchmesser des zweiten Abschnitts (15) des rohrförmigen Körpers (14, 15, 16) ist.

10. Dichtung nach einem der vorhergehenden Ansprüche, wobei der rohrförmige Körper (14, 15, 16) zylindrisch ist.

11. Dichtung (1) nach einem der vorhergehenden Ansprüche, wobei die erste und die zweite Elastomerschicht (17, 18) mit dem rohrförmigen Körper (14, 15, 16) verschmolzen sind.

12. Kombination einer Dichtung (1) nach einem der vorhergehenden Ansprüche und eines Fluidleitungsverbinders, der ein männliches Verbinderteil (2) und ein weibliches Verbinderteil (3) umfasst, wobei das männliche Verbinderteil einen Körper (4) mit einer rohrförmigen Verlängerung (5) umfasst, und wobei das weibliche Verbinderteil (3) einen Körper (9) mit einer Öffnung umfasst, wobei die Dichtung (1) koaxial in der Öffnung angeordnet ist, und wobei die rohrförmige Verlängerung (5) des männlichen Verbinderteils (2) koaxial in der Dichtung (1) angeordnet ist, und wobei der Fluidleitungsverbinder weiter Befestigungsmittel zum zusammen Befestigen des männlichen Verbinderteils (2) und des weiblichen Verbinderteils (3) umfasst.

13. Kombination nach Anspruch 12, wobei die Außenabmessungen der Dichtung (1) mit den Innenabmessungen des Lochs (10) im Verbinderteil (3) übereinstimmen und wobei die Innenabmessungen der Dichtung (1) mit den Außenabmessungen der rohrförmigen Verlängerung (5) übereinstimmen.

14. Kombination nach Anspruch 12 oder 13, wobei das männliche Verbindungsteil (2) und das weibliche Verbindungsteil (3) aus Kunststoff hergestellt sind.

15. Kombination nach einem der Ansprüche 12 bis 14, wobei im montierten Zustand eine radial nach innen gerichtete Umfangslippe (20), die die Dichtung (1) umfasst, nach außen gebogen oder komprimiert und vollständig aus einem inneren Lumen zurückgezogen ist, das durch die erste Elastomerschicht (17) gebildet ist.

## Revendications

1. Joint d'étanchéité (1), en particulier pour un raccord de conduites de fluide, comprenant :
- un corps tubulaire (14, 15, 16) avec une surface intérieure, une surface extérieure, une première extrémité axiale et une seconde extrémité axiale, dans lequel ledit corps tubulaire (14, 15, 16) a un diamètre étagé, comprenant une première section (14), une seconde section (15) et une bride dirigée radialement vers l'extérieur (16) ;
- une première couche élastomère (17) disposée sur la surface intérieure du corps tubulaire (14, 15, 16) ; et
- une seconde couche élastomère (18) disposée sur la surface extérieure du corps tubulaire (14, 15, 16).

2. Joint d'étanchéité (1) selon la revendication 1, dans lequel la première couche élastomère (17) s'étend sur la première extrémité axiale du corps tubulaire (14, 15, 16) et se fond dans la seconde couche élastomère (18).

3. Joint d'étanchéité (1) selon la revendication 1 ou 2, dans lequel la seconde couche élastomère (18) est pourvue d'au moins une nervure circonférentielle (19).

4. Joint d'étanchéité (1) selon l'une quelconque des revendications précédentes, dans lequel la première couche élastomère (17) comprend au moins une lèvre circonférentielle dirigée radialement vers l'intérieur (20) .

5. Joint d'étanchéité (1) selon la revendication 4, dans lequel l'au moins une lèvre circonférentielle (20) est disposée sur une extrémité axiale de la première couche élastomère (17).

6. Joint d'étanchéité (1) selon les revendications 4 ou 5, dans lequel la lèvre circonférentielle dirigée radialement vers l'intérieur (20) est pliable vers l'extérieur ou compressible vers l'extérieur de sorte qu'elle peut être entièrement rétractée d'une lumière intérieure définie par la première couche élastomère (17).

7. Joint d'étanchéité (1) selon l'une quelconque des revendications 4 à 6, dans lequel une seconde lèvre circonférentielle dirigée radialement vers l'intérieur (20) est disposée sur l'autre extrémité axiale de la première couche élastomère (17).

8. Joint d'étanchéité (1) selon l'une quelconque des revendications précédentes, dans lequel la bride dirigée radialement vers l'extérieur (16) est disposée sur la seconde extrémité axiale du corps tubulaire (14, 15, 16).

9. Joint d'étanchéité (1) selon l'une quelconque des revendications précédentes, dans lequel la première section (14) du corps tubulaire (14, 15, 16) a un diamètre réduit par rapport à la seconde section (15) du corps tubulaire (14, 15, 16), dans lequel la seconde couche élastomère (18) est uniquement disposée sur la première section (14) du corps tubulaire (14, 15, 16) de telle sorte que le diamètre extérieur de la seconde couche élastomère (18) est égal au diamètre extérieur de la seconde section (15) du corps tubulaire (14, 15, 16).

10. Joint d'étanchéité (1) selon l'une quelconque des revendications précédentes, dans lequel le corps tubulaire (14, 15, 16) est cylindrique.

11. Joint d'étanchéité (1) selon l'une quelconque des revendications précédentes, dans lequel les première et seconde couches élastomères (17, 18) sont fusionnées au corps tubulaire (14, 15, 16).

12. Combinaison d'un joint d'étanchéité (1) selon l'une quelconque des revendications précédentes et d'un raccord de conduites de fluide comprenant une partie de raccord mâle (2) et une partie de raccord femelle (3), dans laquelle la partie de raccord mâle (2) comprend un corps (4) avec une extension tubulaire (5) et dans laquelle la partie de raccord femelle (3) comprend un corps (9) avec une ouverture, dans laquelle le joint d'étanchéité (1) est agencé coaxialement dans l'ouverture et dans laquelle l'extension tubulaire (5) de la partie de raccord mâle (2) est agencée coaxialement dans le joint d'étanchéité (1), et dans laquelle le raccord de conduites de fluide comprend en outre des moyens de montage pour monter la partie de raccord mâle (2) et la partie de raccord femelle (3) ensemble.

13. Combinaison selon la revendication 12, dans laquelle les dimensions extérieures du joint d'étanchéité (1) correspondent aux dimensions intérieures du trou (10) dans la partie de raccord femelle (3) et dans laquelle les dimensions intérieures du joint d'étanchéité (1) correspondent aux dimensions extérieures de l'extension tubulaire (5).

14. Combinaison selon la revendication 12 ou 13, dans laquelle la partie de raccord mâle (2) et la partie de raccord femelle (3) sont en plastique.

15. Combinaison selon l'une quelconque des revendications 12 à 14, dans laquelle, à l'état monté, une lèvre circonférentielle dirigée radialement vers l'intérieur (20), constituée par le joint d'étanchéité (1), est pliée ou comprimée vers l'extérieur et entièrement rétractée d'une lumière intérieure définie par la première couche élastomère (17).
